(19) Europäisches Patentamt
European Patent Office
Office européen des brevets

(11) **EP 2 904 491 B1**

(12) **EUROPEAN PATENT SPECIFICATION**

(45) Date of publication and mention
of the grant of the patent:
**06.09.2017 Bulletin 2017/36**

(21) Application number: **13843304.0**

(22) Date of filing: **04.10.2013**

(51) Int Cl.:
**G06F 9/50** *(2006.01)*  **G06F 11/34** *(2006.01)*

(86) International application number:
**PCT/SE2013/051166**

(87) International publication number:
**WO 2014/055028 (10.04.2014 Gazette 2014/15)**

(54) **METHOD, NODE AND COMPUTER PROGRAM FOR ENABLING AUTOMATIC ADAPTATION OF RESOURCE UNITS**

VERFAHREN, KNOTEN UND COMPUTERPROGRAMM ZUR ERMÖGLICHUNG DER AUTOMATISCHEN ANPASSUNG VON RESSOURCENEINHEITEN

PROCÉDÉ, NOEUD ET PROGRAMME INFORMATIQUE POUR PERMETTRE UNE ADAPTATION AUTOMATIQUE D'UNITÉS DE RESSOURCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2012 SE 1251125**
**05.10.2012 US 201261710152 P**

(43) Date of publication of application:
**12.08.2015 Bulletin 2015/33**

(73) Proprietor: **Elastisys AB**
**903 55 Umeå (SE)**

(72) Inventors:
• **ELMROTH, Erik**
**S-903 55 Umeå (SE)**
• **GARDFJÄLL, Peter**
**S-90742 Umeå (SE)**
• **TORDSSON, Johan**
**S-907 36 Umeå (SE)**
• **ALEY EL DIN HASSAN, Ahmed**
**S-906 53 Umeå (SE)**
• **LARSSON, Lars**
**S-907 32 Umeå (SE)**

(74) Representative: **Bergenstråhle Group AB**
**P.O. Box 17704**
**118 93 Stockholm (SE)**

(56) References cited:
| WO-A2-2004/081789 | US-A1- 2003 149 685 |
| US-A1- 2003 149 685 | US-A1- 2004 181 794 |
| US-A1- 2008 080 396 | US-A1- 2009 183 168 |
| US-B1- 6 516 350 | US-B1- 8 024 736 |

## Description

### Technical field

The present disclosure relates generally to a method, node and a computer program for enabling automatic adaptation of the size of a pool of resource units, the resource units needed for operation of an application in a computer environment.

### Background

Computing resources in a computer environment in such as a data cloud, computing cloud or a data center for hosting of applications, is a growing way of sharing costs. The fundamental idea is that by sharing the costs for a computer environment such as data center facility, redundant communication bandwidth, power back up, licenses for operating systems, databases, applications environments, the cost for an application provider is lower than that of a dedicated data center or a dedicated platform for each application.

There are a number of different forms of computer environments for shared computing resources, such as enterprise data centers where a company may have concentrated their various business applications and storages. Another example is an operator with various subscriber applications for messaging and multimedia, where the operator may need to scale the capacity for the various applications up and down over time, depending on subscribers' usage behavior. Another example is a provider of hosting facilities, where it is possible to operate an application for a small closed user group, ranging all the way to public services intended for a global user group. This kind of provider of hosting facilities may also be termed data center provider, cloud provider, data cloud provider, applications service provider, not limiting other terms to be used.

An application hosted in a computer environment may have dedicated computer hardware, and may be located in a separate room for that particular hardware and application. However, to gain benefit from operating an application in a computer environment, a tendency is to operate applications in computer environments, where a plurality of applications may be co-located on the same hardware platform. By doing so, different applications may share the same resources with regards to CPU, memory, operating system, database, application server, etc. When one application has a high workload and another application has a low workload, the application with the high workload may take the majority of the computing resources, while the application with low workload may provide an acceptable service through a small share of the computing resources.

A problem with today's technology is to timely add and remove the appropriate amount of resources, for applications executed in a shared computer environment. Provision of too limited resources in terms of CPU-capacity, communication bandwidth, database transaction capacity, etc., may cause technical problems and/or degrade the service performance, provided by an application. On the other hand, over provision of resources will add undesired costs, costs in terms of service fees for shared resources, electrical power, facility cooling, software and hardware licenses, etc. Other problem with existing technologies is to handle dynamical, rapid and/or large changes of usage. If such changes may be unexpected, it might be even more problematic to handle.

US 2004/0181794A discloses automated techniques for managing deployment of one or more resources in a computing environment based on varying workload levels, and may comprise predicting a future workload level based on data associated with the computing environment.

US 2003/0149685A discloses a dynamic configuration and allocation of resources in a data center. The resources are monitored for availability and performance information, and the measured performance information is then used to predict levels of demand for an application in the environment.

US 2009/0183168A discloses a resource allocation system which measures a capacity and/or a usage of computer resources to be managed. Allocation of resources is determined by using at least one item of information among either capacity and usage, and the determined resource amount is the allocated in response to a request for the resource amount.

US 6516350B1 discloses a distributed system for management of distributed resources. The resources in a server are classified or partitioned as global or local, and the ratio of global to local resources is controlled by the system. The system assigns clients across local and global resources and coordinates placement of replicas of target content across global resources. The placement is dynamic and performed when necessary, based on utilization patterns of the target content and replicas.

### Summary

It is an object of the invention to address at least some of the problems and issues outlined above. These and other objects are achieved by the method, by the apparatus and by the computer program products in accordance with the invention as respectively defined in the appended independent claims 1, 12, 14 and 15.

According to one aspect, a method is provided in a resource controller node for enabling automatic adaptation of the size of a pool of resource units, the resource units needed for operation of an application in a computer environment. The method comprises requesting a predicted capacity demand by a resource controller unit from a prediction unit. The method also comprises retrieving a configuration for calculation of the predicted capacity demand from a workload characterization unit by the prediction unit as a response to the request. The method also comprises retrieving at least one key performance indicator based on workload metric data from a monitor unit by the prediction unit as a response to the request. The method also comprises calculating a capacity difference of compute units based on the at least one key performance indicator and the configuration by the prediction unit, the capacity difference defined by a difference of compute units between a current capacity allocation and a predicted capacity demand. The method also comprises translating the difference of compute units to a difference of resource units by a resource adapter unit. The method also comprises transmitting a size adaptation instruction comprising the difference of resource units to the pool of resource units, instructing the pool of resource units to adapt its size of the pool of resource units according to the difference of resource units, thereby enabling automatic adaptation of the pool of resource units to meet an actual workload and a predicted capacity demand of the application.

An advantage with the solution is predictive rather than reactive automatic adaptation of resource units for an application, always ahead of demand. Another advantage is that the solution may be handling of many different workloads and automatically learning of new types of workloads.

According to another aspect, a resource controller node is provided for enabling automatic adaptation of the size of a pool of resource units, the resource units needed for operation of an application in a computer environment, wherein the node is arranged to request a predicted capacity demand by a resource controller unit from a prediction unit. The node is further arranged to retrieve a configuration for calculation of the predicted capacity demand from a workload characterization unit (130) by the prediction unit (120) as a response to the request. The node is further arranged to retrieve at least one key performance indicator based on workload metric data from a monitor unit by the prediction unit as a response to the request. The node is further arranged to calculate a capacity difference of compute units based on the at least one key performance indicator and the configuration by the prediction unit, the capacity difference defined by a difference of compute units between a current capacity allocation and a predicted future workload. The node is further arranged to translate the difference of compute units to a difference of resource units by a resource adapter unit. The node is further arranged to transmit a size adaptation instruction comprising the difference of resource units to the pool of resource units, instructing the pool of resource units to adapt its size of the pool of resource units according to the difference of resource units, thereby enabling automatic adaptation of the pool of resource units to meet an actual workload and a predicted capacity demand of the application.

An advantage is automatic capacity adjustment, much more rapid than human operators possible may achieve. Further, applicable to many resource types, including but not limited to virtual and physical computational infrastructures.

According to another aspect, a computer program, comprising computer readable code means, which when run in a resource controller node for enabling automatic adaptation of the size of a pool of resource units causes the resource controller node for enabling automatic adaptation of the size of a pool of resource units to perform the corresponding method.

The above method and apparatus may be configured and implemented according to different optional embodiments. For example when the request for a predicted capacity demand is received by the prediction unit, it may be distributing the request to at least one metric predictor. Further may be calculating a future metric demand based on monitored metric data by the metric predictor, the monitored metric data retrieved from the monitor unit, resulting in a metric difference. Further may be translating the metric difference to at least one compute unit difference by a capacity mapper. Further may be aggregating the at least one compute unit difference by an aggregator, resulting in an aggregated compute unit prediction, defining a capacity difference. Further may be transmitting the capacity difference to the resource adapter unit.

When calculating the future metric demand, one of these methods may be used: fuzzy logic-based demand prediction, and/or time-series analysis-based demand prediction, and/or pattern recognition-based demand prediction. A time period between adaptation of the pool size may be dynamically determined by a change rate of the workload. When retrieving monitored metric data from the monitor unit, by the workload characterization unit, it may be matched the monitored metric data with predetermined workload classifications. Further may be selecting and mapping the matched workload classification to a suitable configuration for the prediction unit, wherein if the monitored metric data has changed classification, an updated configuration for calculation of the predicted capacity demand may be provided to the prediction unit. Further may be matching the monitored metric with predetermined metric classifications, wherein if the monitored metric matches a predetermined metric classification, an existing configuration may be updated with the matched metric classification, enabling the prediction unit to better calculate the capacity difference, or if the monitored metric is outside the predetermined classifications, a new configuration may be created. Further may be detecting at least one key performance indicator by determination of which metric data that has the primary influence on workload demand for a predetermined application.

Further may be determining the predicted capacity demand by the at least one metric predictor based on a reactive sum of a reactive controller for current capacity allocation calculation and a proactive sum of a proactive controller for future predicted capacity demand calculation, wherein the combination of the reactive sum and the proactive sum determines the capacity difference, enabling that new resources units are operational when the predicted capacity demand is needed, if they are started immediately. Further a predetermined interval may indicate a minimal acceptable size of the pool of resource units and a maximal acceptable size of the pool of resource units, wherein the intervals may be activated according to a determined schedule, wherein each interval is assigned a rank for resolution of overlapping intervals. Further may the minimal and maximal acceptable sizes, and their activation schedules and ranks, be dynamically determined by historical workload metric data analysis. Further may a resource adaptor unit resolve resource units for mapping with available resource units in the pool. Further may the pool size of resource units, with a determined excess size, be reduced by the resource adaptor unit when a prepaid period expires.

An advantage with a self-tuning autonomous system such as the described solution is that it may require little human intervention. Further may the solution handle both planned and unplanned demand peaks. Further may the solution support a multitude of prediction methods and a multitude of metrics. Further may an optimal constitution of resource units that will give the required capacity be chosen automatically. Further may scheduled capacity limits be used, rather than just a single capacity limit. Further may the proposed solution handle a multitude of computational infrastructures.

Further possible features and benefits of this solution will become apparent from the detailed description below.

Brief description of drawings

The solution will now be described in more detail by means of exemplary embodiments and with reference to the accompanying drawings, in which:

Fig. 1 is a block diagram illustrating a resource controller node.

Fig 2 is a block diagram illustrating a prediction unit, according to some possible embodiments.

Fig 3. is a block diagram illustrating a workload characterization unit, according to some possible embodiments.

Fig. 4 is a block diagram illustrating a monitor unit, according to some possible embodiments.

Fig. 5 is a block diagram illustrating a resource adapter unit, according to some possible embodiments.

Fig. 6 is a flow chart illustrating a procedure in a resource controller node.

Fig. 7 is a flow chart illustrating a procedure in a prediction unit, according to some possible embodiments.

Fig. 8 is a flow chart illustrating a procedure in a workload characterization unit, according to some possible embodiments.

Fig. 9 is a block diagram illustrating a resource controller node in a clustered scenario.

Detailed description

Dynamic computer infrastructures, such as grid and cloud computing, offers the tools required to rapidly provision computational resource units from a seemingly infinite resource pool on a pay-as-you-go basis. However, making optimal use of these resource units requires determining which resource unit allocation provides the best service with the least amount of resources. Rapidly changing workloads makes this a challenging problem that best may be solved automatically and quickly lest performance suffers.

Currently available solutions have been shown not to be as efficient at determining the optimal resource allocation as more sophisticated approaches and algorithms, largely due to being reactive: they allow resource utilization to become too high before taking action to mitigate the increased load. This leads to bad performance: either by presenting application users with a poor experience, or by tweaking the algorithms to constantly over-provision resource units.

Experience has shown that different applications may have different workload characteristics e.g. some workloads may be spiky in nature while other workloads may have daily, weekly, monthly, or seasonal patterns. Designing a capacity prediction system that may predict the required resources to handle all the different patterns in the different workloads is not feasible. Simply put, there is no single one-size-fits-all solution.

The combinatorial explosion of possible system configurations can make system administration of a capacity prediction system devolve into pure guesswork as to which configuration is optimal. A self-managed and self-adjusted system may save both time and money and let system administrators work with more pressing tasks.

Briefly described, is a method, node and a computer program provided for enabling automatic adaptation of the size of a pool of resource units to meet predicted demand, the resource units needed for operation of an application in a computer environment. Non-limiting examples of resource units in the computer environment are, virtual or physical machines with a predetermined performance, virtual or real databases, virtual or real communications links, CPU's (Central Processing Units), various memory resources, etc.

A resource controller unit in a resource controller node requests a predicted workload from a prediction unit. The prediction unit retrieves a configuration from a workload characterization unit. The prediction unit further retrieves monitoring data related to at least one key performance indicator (KPI). A KPI may be a type of performance measurement that is central to assessing the workload handling capability and sufficiency of current resource unit allocation. The monitored data relating to a KPI may include a momentary reading, or a line of measurements over a defined time period.

Based on the received configuration and the received KPI the prediction unit performs a calculation to determine a capacity difference. The capacity difference is defined by a difference between a current capacity allocation and a predicted capacity demand. The capacity difference may be a positive number, i.e. the workload is predicted to increase. If the capacity difference is a negative number, the workload is predicted to decrease. If the capacity difference is zero, it is predicted that the current workload will be approximately the same. The capacity difference is defined and quantified by compute units.

When a capacity difference has been calculated and quantified as compute units, it is then translated from compute units into resource units by a resource adapter unit. A non-limiting example is where a certain increase of a number of MIPS (million instructions per second) is needed. This need is then translated into resource units, where each resource unit is capable of providing a specified number of MIPS. The resource adapter unit translates the calculated need, described by compute units, into a need that may be fulfilled by the resources available in the computer environment. A few examples of compute units may be: a soft switch call switching capacity per second, a web server capacity in requests per second or simultaneous connections, domain name server look-ups per second, transmission of messages per second, etc. not limiting to other capacity measurements. An outcome of the resource adapter unit is that an adaptation instruction is transmitted to a computer environment to adapt the size of the pool of resource units, such that the resource unit's pool size meets the future capacity demand. The term predicted capacity demand may also be denoted predicted future capacity demand, or predicted workload. The term current capacity allocation may also be denote current workload. The term monitoring data may also be denoted metric data.

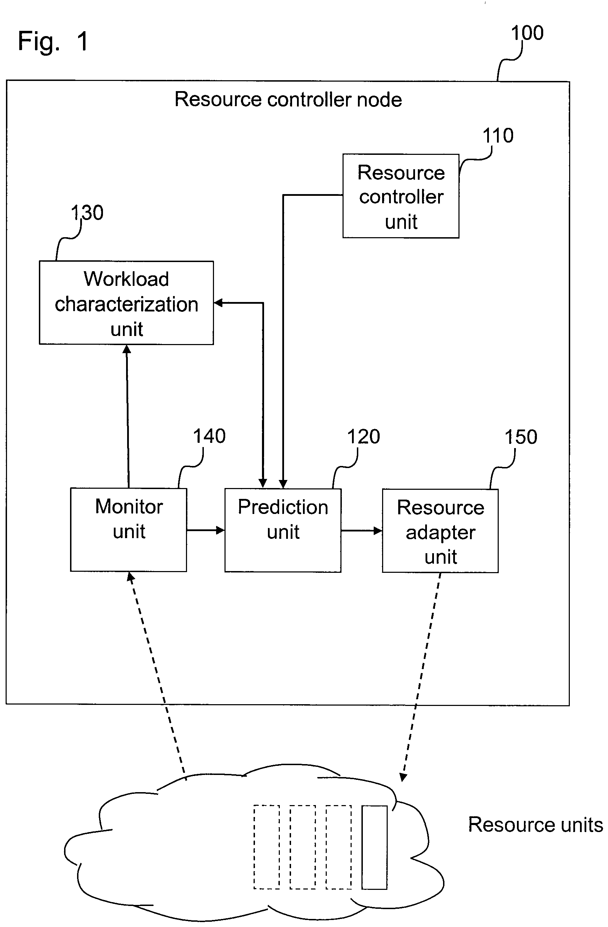

Now the solution will be described in more detail, starting with Fig. 1. Fig. 1 shows a resource controller node 100, with a resource controller unit 110 for control of other units in the node, a prediction unit 120 for predicting a future workload on an application, a workload characterization unit 130 for classification of workload and configuration of the prediction unit 120, a monitor unit 140 for collection of monitoring data, and a resource adapter unit 150 for adaptation and transmission of resize instructions.

The resource controller unit 110 is arranged to control the other units in the resource controller node 100 and to periodically initiate an adaptation procedure of the pool of resource units. The adaptation procedure may start with a request by the resource controller unit 110, to the prediction unit 120 to predict a future workload. The adaptation procedure may also be triggered by other ways, such that a resize window may be ending, or that preparation time of resource units require time to get started. The prediction unit 120 retrieves a configuration from the workload characterization unit 130. The purpose of the configuration is to provide parameters determining how to predict future capacity demand. The configuration may include information of how far into the future a prediction may stretch or how much monitoring data to include in predictions. The prediction unit 120 retrieves monitoring values related to at least one key performance indicator (KPI) from the monitoring unit 140. The monitoring values may be collected by the monitoring unit 140, from an application in the computer environment, from resource units in the computer environment, or from the computer environment itself. Different applications may have different KPI's depending on the nature of the individual application.

The prediction unit 120 calculates a capacity difference based on at least one KPI and a current configuration. The resulting capacity difference defines a difference between current capacity allocation and required capacity allocation to meet future predicted capacity demand. The capacity difference is defined in compute units, which are abstract size units. The resource adapter unit 150 translates the abstract capacity difference, expressed in compute units, into a concrete difference in resource units available in the computer environment.

When the capacity difference in terms of resource units in a computer environment is determined, the resource controller node 100 transmits a size adaptation instruction to the pool of resource units. Thus, it automatically adapts the size of the pool of resource units to meet an actual workload and a future workload of the application.

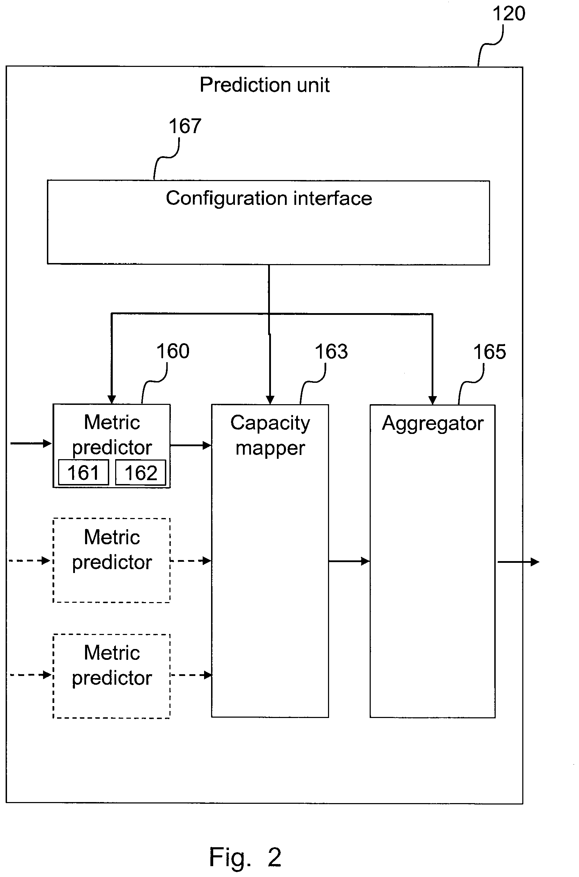

Fig. 2 is a block diagram illustrating a prediction unit, according to some possible embodiments. The prediction unit 120 may comprise at least one metric predictor 160, for calculation of a future workload, with a reactive controller 161 for calculation of what impact a momentary workload may have on the prediction and a proactive controller 162 for calculation of what impact a future workload may have on the prediction. The prediction unit 120 may further comprise a capacity mapper 163, for mapping of predictions to compute units, and an aggregator 165 for aggregation of a prediction. The prediction unit 120 may comprise a configuration interface 167 for reception of a configuration from the workload characterization unit.

When the prediction unit 120 receives a request for a predicted workload, the prediction unit 120 may be arranged to distribute the request to at least one metric predictor 160, which calculate(s) a future metric-specific demand, based on monitored metric data retrieved from the monitor unit 140. The future demand is expressed in a metric-specific way, metric difference e.g. requests per second. The metric difference may be translated to at least one compute unit difference by the capacity mapper 163. The aggregator 165 may be arranged to aggregate the at least one difference expressed in compute units, such that the aggregation results in an aggregated compute unit prediction. The output of the aggregator 165 is a capacity difference, wherein the prediction unit 120 may be arranged to transmit the capacity difference to the resource adapter unit 150.

The prediction unit 120 may be arranged to calculate the future metric demand using for example at least one of the methods: fuzzy logic-based demand prediction, and/or time-series analysis-based demand prediction, and/or pattern recognition based demand prediction not limiting other methods to be used. A time period between adaptation of the pool size, henceforth referred to as resize window, may be dynamically determined by the change rate of the workload.

According to an embodiment, when a prediction request arrives to the prediction unit 120, the request is dispatched to all active metric predictors 160. There may be at least one predictor 160. However, in a plurality of metric predictors 160, a subset of the metric predictors 160 may be active, and another subset of the metric predictors 160 may be passive or deactivated. Depending on the character of a workload different metric predictors 160 may be more or less well suited for making predictions. If an application has an increasing demand for processing power with increasing workload, one type of metric predictor 160 may be suitable. If an application has in increasing need of memory space with increasing workload, another type of metric predictor 160 may be more suitable. The less suitable metric predictor(s) 160 may then be deactivated. Depending on the type of computer environment, it may be a large group of metric predictors 160.

The capacity mapper 163 may translate the metric demand values from the metric predictors 160 into compute unit values, and may forward these difference values (which now share a common unit) to the aggregator 165.

The aggregator 165 may combine the predicted capacity differences into a single aggregated capacity difference, which is reported in compute units and passed on to the resource adapter unit 150.

The different elements in the prediction unit 120, may be configured and/or re-configured before or during operation of the system. The metric predictors 160, the capacity mapper 163, and the aggregator 165, may all individually be configured. Such configuration may be performed through the configuration interface 167. New or updated configurations received by the configuration interface 167 may be received from the workload characterization unit 130.

By supporting a configurable set of metric predictors 160, the system may be capable to accommodate many different prediction algorithms and each such algorithm may be configured to operate against a wide range of metrics. The aggregator 165 enables combination of different predictions, from different algorithms and for different metrics, into a unified result.

It may take several minutes from launching a resource unit, such as a virtual machine, until that resource unit is fully operational and ready to accept a share of the workload. Requesting more resource units from the computing environment must be done well ahead of time, before a demand peak occurs. Therefore, metric predictors 160 may strive to provision resources in advance to make sure that capacity is already available when demand peaks occur.

Different metric predictors 160 may be using different prediction techniques. Non-limiting examples of prediction techniques are: trend estimation, fuzzy control, and time series analysis, not limiting other techniques to be used.

An example of a technique for trend estimation-based prediction

The trend estimation-based capacity predictor may estimate a future workload based on the current workload change rate, e.g., the slope of the load curve for the observed metric. All predictions may be carried out relative to a prediction horizon, which represents the prediction time frame or for how far into the future the metric predictor 160 may be configured to make its predictions. The prediction horizon may be equal to the boot-up time for a new resource. This prediction technique may be seen as estimating future workload by following the current slope of the load curve to the end of the prediction horizon.

The technique for trend estimation-based prediction may use an algorithm, which may be carried out in two main activities:

- calculate the capacity difference, the amount of missing/surplus capacity, relative both to the current workload and the projected future workload; and

- apply aggregation rules to combine the differences into a final difference.

The first mentioned activity may make use of two conceptual parts: a reactive controller 161 and a proactive controller 162. The reactive controller 162 determines how many resources that are needed to keep up with the current demand and calculates its capacity difference as:

$$\Delta\_\text{"reactive"} = [\![\text{"load"}]\!]\_\text{"current"} - [\![\text{"capacity"}]\!]\_\text{"current"}$$

The proactive controller 162 tries to keep up with future demand and estimates how much capacity needs to be added now for demand to be met by the time new resource units are up and running, which may be at the end of the prediction horizon. As such, proactive controller 162 may calculate the capacity difference as:

$$\Delta\_\text{"proactive"} = \text{"slope"} * \text{"prediction horizon"}$$

The slope may be calculated via simple linear regression by fitting a line through the N latest metric demand observations, where N is configurable.

The second mentioned activity combines the two capacity differences and resolves any conflicts that may arise. It may work according to the following:

If both controllers decide to provision more capacity, scale up, their decisions are added

$$\Delta\_\text{"total"} = \Delta\_\text{"reactive"} + \Delta\_\text{"proactive"}$$

If slope has been down for sufficiently long and there is a capacity surplus ($\Delta\_\text{"reactive"} < 0$):

Surplus is cut to a fraction, to avoid too rapid scale-down.

If there is a capacity surplus but future demand is expected to increase, the relative size of the factors may decide:

If the reactive factor, capacity surplus, wins, no modification is necessary.
If the proactive factor, future demand, wins capacity is added continued increase is expected.

An example of a technique for automatically adjusting the prediction horizon

The prediction horizon may be a time period, for example the number of seconds into the future for which the trend estimation-based capacity predictor makes its predictions. In order for this to be sufficiently large to result in timely predictions for provisioning, it needs to take into account the full start-up time of a new resource unit. The full start-up time may for example include provisioning delay from the computer environment, boot-up time for operating systems, contextualization, and application state replication. Thus, it may be highly specific to both the computer environment and the application itself. An operator may provide a rough estimate, but that number needs to be continuously improved and refined by a system itself using empirical evidence, a system implemented according to this solution.

The solution may be using a liveness test. Such a liveness test may be invoked at regular intervals by the resource adapter unit 150, to ensure that deployed resources units are operational. Besides being used for automatic failure handling, if a resource unit fails, another resource unit may be provisioned to take its place, it is also used to continuously update the prediction horizon. Whenever a new resource unit is started, the system measures the time it takes for the resource unit to become operational, as indicated by the liveness test, and records the time until the resource unit has become fully operational. Another term for liveness test is keep alive check, or keep alive monitoring. The trend estimation-based capacity metric predictor 160 may be configured to use these values when it is reconfigured with respect to the prediction horizon duration.

An example of a technique for automatically adjusting resize window duration

The duration of a resize window may be set by a limit for how frequently the resource controller unit 110 initiates an adaptation of the pool of resource units. A too short resize window may result in premature actions and unnecessary changes and a too long resize window may result in too late reactions. Furthermore, the optimal resize window size may change with the workload characteristics, making manually setting a static resize window length a challenging task.

To address this issue, the resource controller unit 110 may automatically reconfigure the resize window during operation. For example, this allows metric predictors 160 to react more frequently and thereby follow changes more closely, when there are rapid changes in workload demand, such as when a massive demand peak is building up.

Reconfiguring the rate at which resize calculations are performed may for example be done based on average server processing times, i.e. the average time taken by a server to process a request and send a response.

An example of a technique for fuzzy control-based prediction

Fuzzy logic predictors are used for predictions in different domains including service rates in high speed wide area networks, estimating the rotor position and error in a switched reluctance motor drive, for signal prediction in nuclear systems and changes in ocean wave characteristics. According to an embodiment the metric predictors 160 may employ a fuzzy logic technique that may predict the future demand for a service.

An example of a technique for time series analysis-based prediction

ARMA and ARIMA models are two non-limiting examples of models for time series data that may be used for forecasting the future values for time series. The ARMA model may be used with weakly stationary stochastic processes while the ARIMA model may be applied when data shows some evidence of non-stationarity. Many of the workloads exhibit some correlation between the workload and time. Most of these workloads may be represented using ARMA or ARIMA models using the Box-Jenkins method to make forecasts for the future of the workload.

An example of a technique for pattern recognition-based automatic demand peak discovery

Many usage trends are cyclical in nature, e.g. weekly sporting events that cause increases in interest among fans during game days. Identification of such trends over both the long and short term helps to identify patterns that lead to peaks, before they happen. This methodology is employed in several capacity predictors, including but not limited to ones that operate with artificial intelligence and machine learning approaches, e.g. artificial neural networks (ANN) and genetic algorithms. Pattern recognition may be implemented in different ways. In the present disclosure pattern recognition may be implemented such that cyclical workloads on a computer environment may be predicted well in time before a workload peaks, even if a peak may build up rapidly.

An example of a method for metric type translation to a normal form

Monitoring values for a given metric may be instantaneous readings, rates, or counters over a given time period. For example, CPU utilization is an instantaneous reading, requests per second are a rate, and request count, for last hour, minute or second, is a counter. Normalizing these different types of metric representations into a single format simplifies configuration of metric predictors 160, and is performed such that the output is in a normalized form. Thus, metric predictors 160 do not necessarily need to be aware of which type a metric has, but operates on a higher level of abstraction.

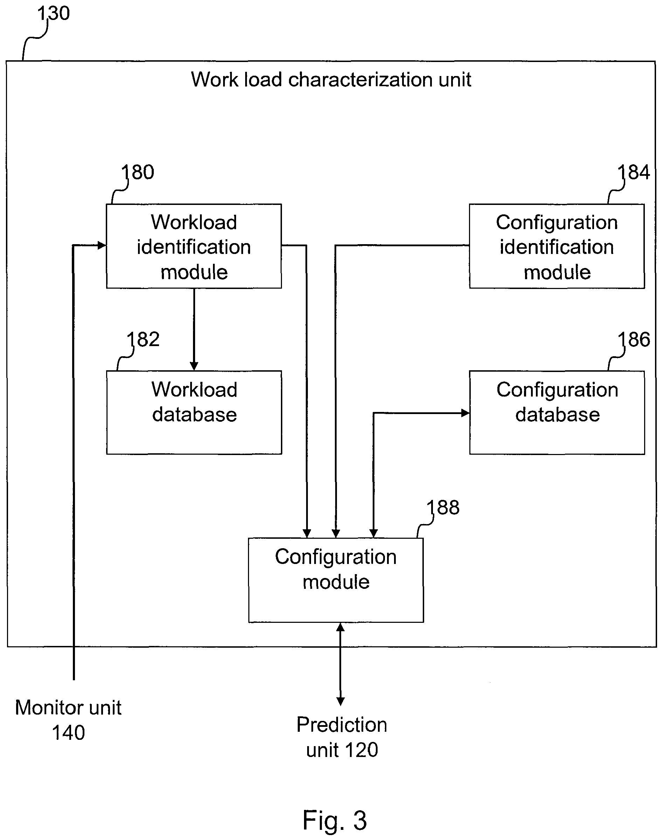

Fig 3. is a block diagram illustrating a workload characterization unit 130, according to some possible embodiments. A workload identification module 180, comprised by the workload characterization unit 130, may be arranged to retrieve monitored metric data from the monitor unit 140. A configuration identification module 184, comprised by the workload characterization unit 130, may be arranged to match the monitored metric data with predetermined workload classifications, and map the workload classification to a suitable configuration for the prediction unit 120. If the monitored metric data has changed classification, an updated configuration for calculation of the predicted workload may be provided to the prediction unit 120. Identified and classified workload are stored in the workload database 182. Configurations for handling of different workload classifications are stored in the configuration database 186.

When the monitored metric is matched with predetermined metric classifications by the configuration module 188, the configuration module 188 may determine that an existing configuration may be updated to enable the prediction unit 120 to better calculate a capacity difference. An alternative is, if it is determined that the monitored metric is outside the predetermined classifications, creation of a new configuration.

The configuration module 188 may be arranged to detect at least one key performance indicator by determination of which metric data which may have the primary influence on workload demand for a predetermined application.

According to an embodiment the workload characterization unit 130 may be arranged to analyze the statistical properties of the workload in order to classify the workload. Factors affecting the statistical properties of a workload may include request arrival processes, request arrival rates, inter-arrival times, request processing time distributions, memory access patterns, network usage, I/O patterns, storage used, and workload mixture, i.e. the request types in a workload. This identification may use techniques from data stream classification. Since the properties of the workloads might change over time, the identification is done continuously. The identification process is periodically invoked as a background process. If it is detected that the workload has changed nature, i.e. belongs to a new workload class, the configuration module 188 may be invoked to carry out necessary configuration adjustments.

The workload database 182 may contain the statistical properties that characterize the known set of workload classes. The configuration identification module 184 may analyze how well certain configuration values perform for a given workload class. The configuration identification module 184 may determine the optimal configuration for the prediction unit 120, for the current workload class, and updates the configuration database 186 accordingly. New configuration values are applied by invoking the configuration module 188.

The configuration database 186 may contain configuration values for the prediction unit 120, optimized for known workload classes. A non-limiting example of a configuration may be illustrated by:

```
<?xml version="1.0" encoding="UTF-8" standalone="yes"?>
<!-- predictor configuration delta -->
<configuration>
<entry>
  <!-- The metric being monitored on machine instances -->
  <key>metric</key>
  <value>requestcount</value>
</entry>
<entry>
  <!-- The service capacity of an instance (requests / s). -->
  <key>resource.capacity</key>
  <value>500.0</value>
</entry>
<entry>
  <!-- The boot time of a machine instance (s). -->
  <key>prediction.horizon</key>
  <value>180</value>
</entry>
<!-- and so forth ... -->
</configuration>
```

A configuration may be also in a plain text format, or in ASCII format, or in a database table format, or in binary format, or any other suitable format for a configuration.

The configuration module 188 listens for requests to update the configuration of the prediction unit 120, according to the values stored in the configuration database 186. The configuration updates may be carried out using the configuration interface 167 exposed by the prediction unit 120, shown in Fig. 2.

The workload identification module 180 may at predetermined intervals initiate a new round of workload identification. The workload identification module 180 may also be initiated when a suboptimal workload identification is detected by the resource controller unit 110. An activity may be reading monitoring data for the relevant key-performance indicators from the monitoring subsystem by the workload identification module 180. Another activity may perform a statistical analysis in order to characterize the current workload. The statistical properties of the current workload may be matched against the known workload classes that are stored in the workload database 182. If the current workload can be matched against an existing workload class, classification is deemed successful and the current workload class is persisted in the workload database 182. If workload has changed classification, the configuration module 188 may be invoked to carry out any necessary re-tuning of the prediction unit 120.

The configuration identification module 184 may periodically adjust the prediction unit 120 configuration parameters for a determined workload class. The configuration identification module 184 may be triggered at predetermined intervals to determine the effectiveness of the current prediction unit 120 configuration, with respect to the current workload's class. The configuration identification module 184 may be triggered by the resource controller unit 110 if it is determined that a certain KPI is underweighted. Such mismatches may lead to poor predictions. The resource controller node 100 may also be provided feedback from a system administrator, that the resource controller node 100 is under performing. If a current configuration is found to be sub-optimal, the configuration may be updated for the current workload class in the configuration database 186. In case configuration parameters in the configuration database 186 have changed, the configuration module 188 may be invoked to carry out any necessary re-configuration of the prediction unit 120.

The configuration module 188 may be updating configuration values of the prediction unit 120. Such updates may be, for example, triggered by the workload identification module 180 or the configuration identification module 184. The configuration module 188 may be querying the configuration database 186 for configuration values for a given workload class. The configuration module 188 may then apply these configuration values to the prediction unit 120 via its configuration interface 167, shown in Fig. 2.

An example of a technique for automatically detecting service capability of an application with respect to a given metric data

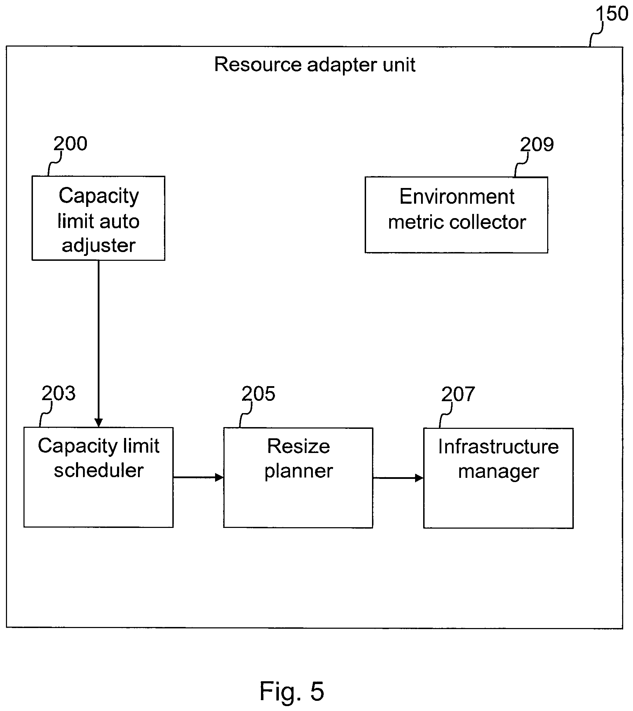

Demanding that a human operator knows precisely how many units of a given metric a service component can handle per time unit may be unreasonable, in particular since it has been shown that e.g. web servers exhibit an exponential growth relationship between number of requests and response time. Based on monitoring data, a dynamically updated estimate of e.g. how many requests per second a resource unit can serve may be determined. Once a service component starts failing to meet demand in a satisfactory way, the estimate may be modified accordingly such that the estimate eventually may be correct. This estimate may be used to determine the pool size of resource units by the resize planner 205, which is an element in the resource adapter unit 150, shown in Fig. 5.

An example of a technique for supervised learning of application service performance and provisioning "fitness"

As part of a holistic management of the various units and elements part of a resource controller node 100, a supervised learning mechanism may be employed to enable administrators to modify the resource controller node 100 without detailed knowledge of each configuration parameter. Such modifications may take the form of supervised learning, a technique used in artificial intelligence. The resource controller node 100 as a whole is told whether it has done a good or bad job. Such feedback may be, for example, indicated by the level of service experienced by end-users, and this feedback may cause parameters to each metric predictor 160, capacity limit determination algorithm, and resource capacity estimator to change slightly so that in time, continuous feedback gives a resource controller node 100 that performs well, even though a supervising administrator has not manually tried to determine each individual configuration value manually. Supervised learning may be scripted to run as a continuous external process outside the resource controller node 100, e.g. as a script that performs certain actions and compares the completion time against a set of thresholds determined as part of a service-level agreement.

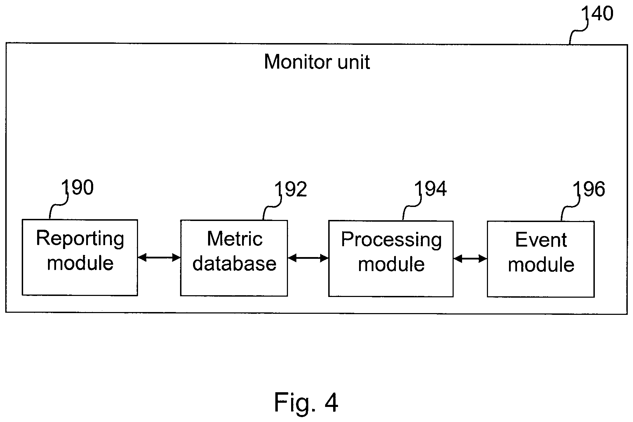

Fig. 4 shows a block diagram illustrating a monitor unit, according to some possible embodiments. The monitor unit 140 may be arranged to comprise elements for various tasks. A reporting module 190 may be arranged to listen for incoming monitored metric data pertaining to the monitored computer environment. The metric data may be reported either from a remote process such as a sensor deployed in a resource unit, or retrieved by the resource adapter unit 150 from infrastructure elements for resource units. Metric data may be received from the computer environment, or metric data may be retrieved from the computer environment. The metric data format may contain the following elements:

- resource unit identifier of the resource unit that this value pertains to,

- timestamp which shows when the value was observed,

- metric data type which characterizes the measurement into one of rate, counter, and instantaneous reading,

- metric data name/tag which identifies which metric the value belongs to,

- metric data value of the observed value,

not limiting other types of metric data.

Metric data may be stored in a monitoring database 192. The monitoring database 192 may provide persistent storage and query capabilities to present subsets of measurements. A processing module 194 may provide various processing methods for measurements, such as: time-series compression to present more compact time-series while preserving the general character of the time-series, time-series smoothing, for example to interpolate/extrapolate time series to provide gap-filling functionality to complete time series for which there are none or too few reported values, not limiting other similar tasks to be performed by the processing module 194. An event module 196 may provide services related to the monitoring of the resource controller node 100 itself. Events occurring in the resource controller node 100 may be subscribed to by subscribers that wish to receive some sort of notification using e.g. email, SMS (Short Message Service), SNMP (Simple Network Management Protocol), HTTP (Hyper Text Transfer Protocol), HTTPS (HTTP Secure), FTP (File Transfer Protocol), SFTP (Secure FTP), or plain text file, or other types of notification formats. The event module 196 may keep track of such subscriptions and emits the requested notifications when the event(s) occur.

An example of a technique for automatic detection of vital key performance indicators

The performance of a given resource unit may be dependent on a number of factors, and the relationship between factors may be unclear to an operator of a computer environment. It may, for example, not be obviously clear what impact CPU (central processing unit) and memory utilization will have for a given resource unit. By employing introspection and profiling on the computer environment and/or resource controller node 100, e.g. leveraging hypervisor monitoring facilities in the cloud computing case, or Java Virtual Machine profiling in Java environments, the resource unit's execution may be examined and trends may be calculated such that while the operator of a computer environment may not have been previously aware of a relationship between fluctuations in e.g. request count and memory consumption, metric predictors may be configured to take such relationships into account if they are found to exist. This may provide earlier detection of trends, as they may be based on parameters not previously known to be early indicators of performance trends.

Fig. 5 shows a block diagram illustrating a resource adapter unit 150, according to some possible embodiments. The resource adapter unit 150 may be arranged to comprise elements for various tasks. A capacity difference, expressed in compute units, arrives from the prediction unit 120. The capacity difference may be received by a capacity limit scheduler 203 comprised by the resource adapter unit 150, where it may be bounded within a permissible range that is activated based on a predetermined schedule. Such limits may express min-max rules for capacity in order to place budget ceilings to prevent overspending and/or guarantee minimum computer environment capacity levels in order to handle expected peaks.

The by capacity limits bounded capacity difference may be passed to a resize planner 205, which may convert the capacity difference defined in abstract compute units into resource units in the most profitable way. This may for example include solving optimizations problems, as there are many different possible mappings between a number of compute units to a number of resource units, but some may be more beneficial than others. The resize planner 205 may determine the best such mapping. Resource units may correspond to the computer environments infrastructure's own various resource sizes, e.g. in a shared environment such as a cloud computing contexts, differently capable virtual machines or, in platform-as-a-service context, differently capable application server instances. The resize planner 205 may emit a resource difference expressed in resource units to an infrastructure manager 207.

The infrastructure manager 207 may use the computer environment's specific protocol to modify the pool size of resource unit allocation by allocating more resource units or de-allocating ones that were previously allocated. However, the infrastructure manager 207 may not de-allocate resources if it determines that it would be bad to do so at this point in time, according to some policy.

The resource adapter unit 150 may be arranged to perform metric data collection, by use of an environment metric collector 209, from the infrastructure about the allocated resource units using any computer environment adapted procedure. Examples of such metric data collection are, CPU load, memory usage, disk usage, and similar hardware or operating system related metric data.

A capacity limit auto adjuster 200 may be arranged to use pattern recognition to determine suitable capacity limits according to observed trends in demand, such as Friday night peaks for a video streaming service. Capacity limits that are too restrictive may be identified and notifications may be sent out to an administrator of the resource controller node 100 as a notification that the limits should be updated. Additionally, a meta-predictor, which may be seen as a higher-level predictor, which bases its predictions on the outcomes of a number of subordinate predictors. The meta-predictor may be employed to set the minimal accepted capacity limit to ensure that regardless of prediction unit 120 output, the base upper and lower capacity limits may be kept within a certain range. This may help to achieve a higher degree of certainty, since such predictions may be made on a much more long-term basis and according to another set of business rules than required for any given metric predictor 160. For example, a metric predictor 160 may take only the last few hours into account, whereas a capacity limit may be determined on a monthly basis.

For shrinking the size of the resource allocation, an administrator of a computer environment and/or a resource controller node 100 may set policies for when to scale down. Differences between service infrastructures and billing terms, may impact what kind of behavior that is desirable. For certain computer environments, scaling down should be instantaneous, e.g. privately owned and operated computer environment, whereas in other cases, resources that have been paid for should not be terminated until the pre-paid time period expires, for example public cloud services. Such policies may be infrastructure-specific and therefore enforced by an owner of the computer environment.

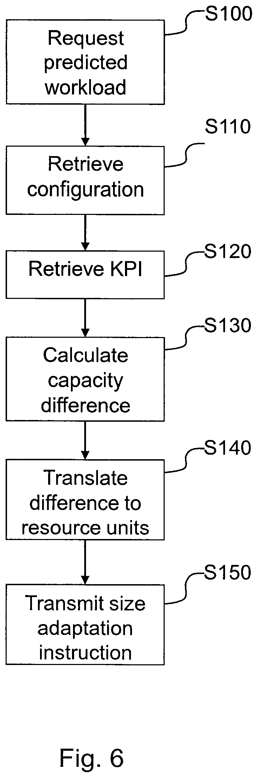

Fig. 6 shows a flow chart illustrating a procedure in a resource controller node, such as the resource controller node 100. The various actions may come in different orders than presented in this description, or in a different order than shown in this or other flowcharts related to this description, or some steps may be performed in parallel.

In a step **S100** a prediction of workload is requested. The workload prediction may be requested by a resource controller unit, such as the resource controller unit 110 shown in Fig. 1. In a step **S110** a configuration is retrieved. The configuration may be retrieved by a workload characterization unit by a prediction unit, such as the workload characterization unit 130 and prediction unit 120. In a step **S120** monitoring values related to at least one key performance indicator (KPI) are retrieved. The KPI is based on workload metric data and may be retrieved from a monitor unit by the prediction unit, such as the monitor unit 140 and the prediction unit 120. In a step **S130** is a capacity difference calculated, based on the configuration and monitoring values related to at least one KPI. The calculation results in a capacity difference, where the capacity difference is defined by a difference in compute units between a current workload and a predicted future workload. The calculation may be performed by a prediction unit such as prediction unit 120. In a step **S140**, the capacity difference is translated from compute units to resource units, such that abstract compute units are translated into resource units mapping with a specific computer environment. The translation may be performed in resource adapter unit, such as the resource adapter unit 150. In a step **S150**, an instruction is transmitted, and the instruction includes a size adaption instruction. The adaptation instruction may be transmitted from the resource adapter unit to the computer environment. Thereby may the pool size of resource units automatically be adapted to meet a predicted future workload.

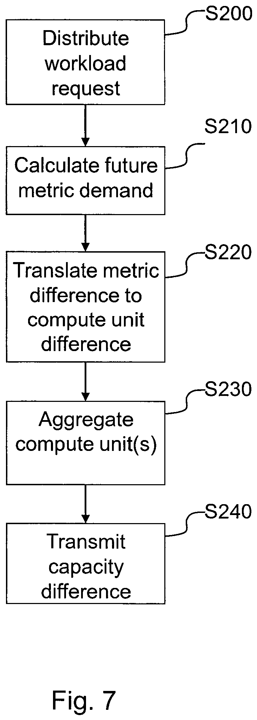

Fig. 7 is a flow chart illustrating a procedure in a prediction unit, such as a prediction unit 120, according to some possible embodiments. In a step **S200** a workload request may be distributed. Such workload request may be distributed to at least one metric predictor such as one of the metric predictors 160. In a step **S210** the at least one metric predictor 160 may calculate a future metric demand, based on previously mentioned at least one key performance indicator and an actual configuration. The result of the calculation may be expressed as a predicted demand difference, i.e. a difference between the current capacity allocation and a predicted capacity demand. In a step **S220** the predicted metric difference may be translated into a compute unit difference, the translation may be performed by a capacity mapper 163. In a step **S230** the compute unit difference may be aggregated. In a case where there are a plurality of predicted capacity differences, expressed in compute units, it is desirable to aggregate these into a single capacity difference. Also in a case where there only is one capacity difference from the capacity mapper, it is desired to do some aggregation processing of the capacity difference. The aggregation may be performed by an aggregator 165. In a step **S240**, the aggregated capacity difference is transmitted. An example is transmission from the prediction unit 120 to a resource adapter unit 150, shown in Fig. 2.

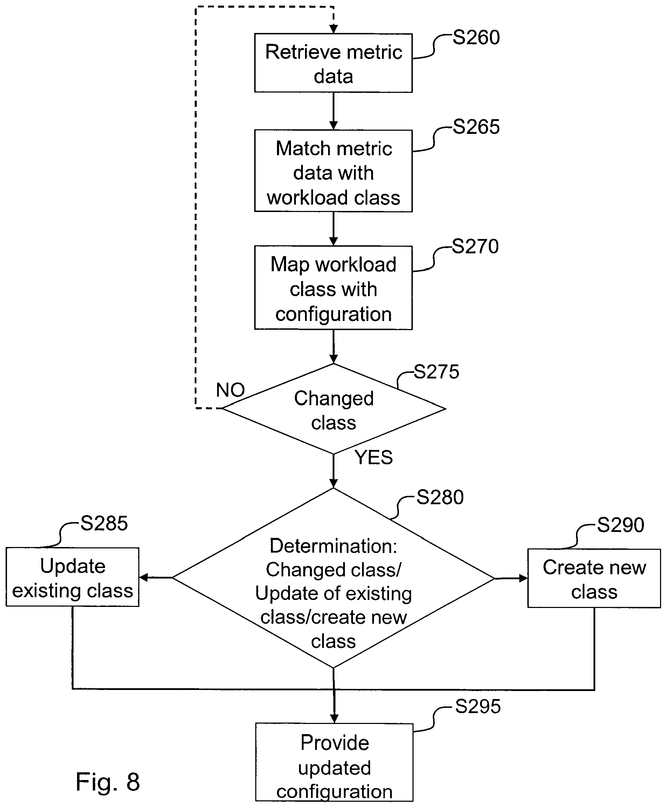

Fig. 8 shows a flow chart illustrating a procedure in a workload characterization unit, such as the workload characterization unit 130, according to some possible embodiments.

In a step **S260** metric data is retrieved. The metric data may be retrieved from a monitoring unit, such as the monitoring unit 140, shown in Fig. 4. In a step **S265** the metric data may be matched with a workload classification. Metric data analysis may indicate that the workload belongs to an already determined workload class. The workload classification may exist in the workload database 182. In a step **S270** the classified workload is mapped with a configuration. The configuration may be pre-stored in the configuration database 186. In a step **S275** it may be determined that the retrieved metric data sufficiently closely matches a workload class and that there is a configuration mapping associated with the workload class. If it in **S275** is determined that the workload metric has changed class, the procedure may continue to a step **S280**. In step **S280** it may be determined that an existing workload class needs to be updated and/or the configuration association for the workload class needs to be updated. Such update may be performed in a step **S285.** It may also be determined that a new workload class should be created, with a new configuration associated. If a new workload class and a new configuration needs to be created, that may be performed in a step **S290**. In step **S280** it may also be determined that a new workload class is not necessary and that existing workload classes does not need to be updated. However, it may be determined that the current workload metric may be better handled by another workload class, and therefore it may be determined that the workload class should be changed. In a step **S295** a new configuration may be provided, for example including a size adaptation instruction to the pool of resource units.

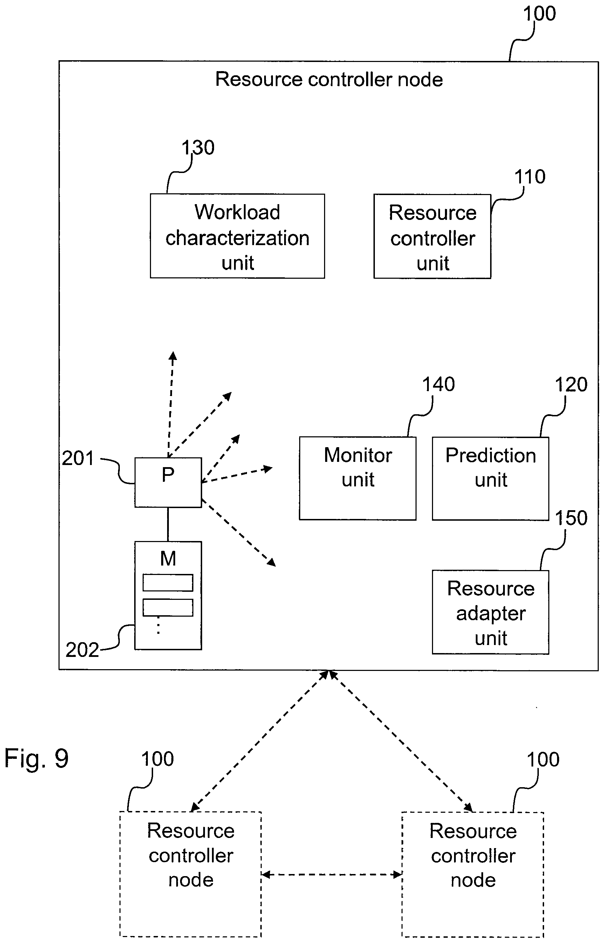

Fig. 9 shows a block diagram illustrating a resource controller node 100 in a clustered scenario with a processing unit 201 and a memory unit 202.

In an embodiment, the resource controller node 100 comprises a processing unit "P" 201 for execution of instructions of computer program software, according to Fig. 9. The figure further shows a memory unit "M" 202 for storage of a computer program software and cooperation with the processing unit 201. Such processing unit 201 and memory unit 202 may be provided by a general purpose computer, or a computer dedicated for a resource controller node 100.

Fig. 9 further shows two additional resource controller nodes 100. In a computer environment, related to data clouds, computing clouds, hosting services, data centres, and other similar types of computer environments, where a resource controller node 100 might be used, the function provided by a resource controller node 100, may be provided by a cluster of resource controller nodes 100. In a cluster of resource controller nodes 100, each node may be similar configured. In a cluster of resource controller nodes 100, each node may have different configuration for different tasks. The person skilled in the art may set up a solution based on resource controller nodes 100 adapted for each individual computer environment.

While the solution has been described with reference to specific exemplary embodiments, the description is generally only intended to illustrate the inventive concept and should not be taken as limiting the scope of the solution. For example, the terms "predicted workload", "resource units" and "metric data" have been used throughout this description, although any other corresponding nodes, functions, and/or parameters could also be used having the features and characteristics described here. The solution is defined by the appended claims.

## Claims

**1.** A method in a resource controller node (100) for enabling automatic adaptation of the size of a pool of resource units, the resource units needed for operation of an application in a computer environment, the method comprising:

- requesting a predicted capacity demand by a resource controller unit (110) from a prediction unit (120),
- retrieving a configuration for calculation of the predicted capacity demand from a workload characterization unit (130) by the prediction unit (120) as a response to the request,
- retrieving at least one key performance indicator based on workload metric data from a monitor unit (140) by the prediction unit (120) as a response to the request,
- calculating a capacity difference of compute units based on the at least one key performance indicator and the configuration by the prediction unit (120), the capacity difference defined by a difference of compute units between a current capacity allocation and a predicted capacity demand,
- translating the difference of compute units to a difference of resource units by a resource adapter unit (150),

- transmitting a size adaptation instruction comprising the difference of resource units to the pool of resource units, instructing the pool of resource units to adapt its size of the pool of resource units according to the difference of resource units, thereby enabling automatic adaptation of the pool of resource units to meet an actual workloads and a predicted capacity demand of the application.

2. The method according to claim 1, comprising:

when the request for a predicted capacity demand is received by the prediction unit (120),

- distributing, by the prediction unit, the request to at least one metric predictor (160),
- calculating a future metric demand based on monitored metric data by the metric predictor (160), the monitored metric data retrieved from the monitor unit (140), resulting in a metric difference,
- translating the metric difference to at least one compute unit difference by a capacity mapper (163),
- aggregating the at least one compute unit difference by an aggregator (165), resulting in an aggregated compute unit prediction, defining a capacity difference,
- transmitting the capacity difference to the resource adapter unit (150).

3. The method according to claim 1 or 2, comprising

- calculating the future metric demand using at least one of the methods:
- fuzzy logic-based demand prediction, and/or
- time-series analysis-based demand prediction, and/or
- pattern recognition-based demand prediction.

4. The method according to any of claims 1 - 3, wherein:

- a time period between adaptation of the pool size is dynamically determined by a change rate of the workload.

5. The method according to any of claims 1 - 4, comprising:

- retrieving monitored metric data from the monitor unit (140), by the workload characterization unit (130),
- matching the monitored metric data with predetermined workload classifications,
- selecting and mapping the matched workload classification to a suitable configuration for the prediction unit (120), wherein
- if the monitored metric data has changed classification, an updated configuration for calculation of the predicted capacity demand is provided to the prediction unit (120).

6. The method according to claim 5, comprising:

- matching the monitored metric with predetermined metric classifications, wherein
- if the monitored metric matches a predetermined metric classification, an existing configuration is updated with the matched metric classification, enabling the prediction unit (120) to better calculate the capacity difference, or
- if the monitored metric is outside the predetermined classifications, a new configuration is created.

7. The method according to any of claims 1 - 6, comprising:

- detecting at least one key performance indicator by determination of which metric data that has the primary influence on workload demand for a predetermined application.

8. The method according to any of claims 1 - 7, comprising:

- determining the predicted capacity demand by the at least one metric predictor (160) based on a reactive sum of a reactive controller (161) for current capacity allocation calculation and a proactive sum of a proactive controller (162) for future predicted capacity demand calculation, wherein
- the combination of the reactive sum and the proactive sum determines the capacity difference, enabling that new resources units are operational when the predicted capacity demand is needed, if they are started immediately.

9. The method according to any of claims 1 - 8, wherein:

- a predetermined interval indicates a minimal acceptable size of the pool of resource units and a maximal acceptable size of the pool of resource units, wherein
- the intervals are activated according to a determined schedule, wherein
- each interval is assigned a rank for resolution of overlapping intervals.

10. The method according to claim 9, wherein:

- the minimal and maximal acceptable sizes, and their activation schedules and ranks are dynamically determined by historical workloads metric data analysis.

11. The method according to any of claims 1 - 10, comprising:

- resolving resource units by the resource adaptor unit (150) for mapping with available resource units in the pool, wherein
- the pool size of resource units, with a determined excess size, is reduced by the resource adaptor unit (150) when a prepaid period expires.

12. A resource controller node (100) for enabling automatic adaptation of the size of a pool of resource units, the resource units needed for operation of an application in a computer environment, wherein:

- the node is arranged to request a predicted capacity demand by a resource controller unit (110) from a prediction unit (120),
- the node is arranged to retrieve a configuration for calculation of the predicted capacity demand from a workload characterization unit (130) by the prediction unit (120) as a response to the request,
- the node is arranged to retrieve at least one key performance indicator based on workload metric data from a monitor unit (140) by the prediction unit (120) as a response to the request,
- the node is arranged to calculate a capacity difference of compute units based on the at least one key performance indicator and the configuration by the prediction unit (120), the capacity difference defined by a difference of compute units between a current capacity allocation and a predicted future workload,
- the node is arranged to translate the difference of compute units to a difference of resource units by a resource adapter unit (150),
- the node is arranged to transmit a size adaptation instruction comprising the difference of resource units to the pool of resource units, instructing the pool of resource units to adapt its size of the pool of resource units according to the difference of resource units, thereby enabling automatic adaptation of the pool of resource units to meet an actual workloads and a predicted capacity demand of the application.

13. The node according to claim 13, wherein:

- the node is arranged to perform any of the method claims according to claim 2 to 11.

14. A computer program, comprising computer readable code means, which when run in a resource controller node for enabling automatic adaptation of the size of a pool of resource units according to the claims 12 or 13, causes the resource controller node for enabling automatic adaptation of the size of a pool of resource units to perform the corresponding method according to any of the claims 1 - 11.

15. A computer program product, comprising a computer readable medium and a computer program according to claim 14, wherein the computer program is stored on the computer readable medium.

**Patentansprüche**

1. Verfahren in einem Ressourcenreglernetzknoten (100) zum Ermöglichen automatischer Adaption der Größe eines Bündels von Ressourceneinheiten, wobei die Ressourceneinheiten benötigt werden für den Betrieb einer Applikation in einer Computerumgebung, wobei das Verfahren aufweist:

- Anfragen einer vorhergesagten Kapazitätsanforderung mittels einer Ressourcenreglereinheit (110) von einer Vorhersageeinheit (120),

- Abfragen eine Konfiguration zur Berechnung der vorhergesagten Kapazitätsanforderung von einer Arbeitslastcharakterisierungseinheit (130) mittels der Vorhersageeinheit (120) als eine Antwort auf die Anfrage,
- Abfragen mindestens einer Leistungskennzahl basierend auf Arbeitslastkenndaten von einer Überwachungseinheit (140) mittels der Vorhersageeinheit (120) als eine Antwort auf die Anfrage,
- Berechnen einer Kapazitätsdifferenz von Rechnereinheiten basierend auf mindestens einer Leistungskennzahl und der Konfiguration mittels der Vorhersageeinheit (120), wobei die Kapazitätsdifferenz definiert ist mittels einer Differenz von Rechnereinheiten zwischen einer momentanen Kapazitätsallokation und einer vorhergesagten Kapazitätsanforderung,
- Übersetzen der Differenz von Rechnereinheiten in eine Differenz von Ressourceneinheiten mittels einer Ressourcenadaptereinheit (150),
- Übermitteln einer Größenadaptionsinstruktion, die die Differenz von Ressourceneinheiten zu dem Bündel von Ressourceneinheiten umfasst, Anweisen des Bündels von Ressourceneinheiten dessen Größe des Bündels von Ressourceneinheiten entsprechend der Differenz von Ressourceneinheiten zu adaptieren, wodurch automatische Adaption des Bündels der Ressourceneinheiten ermöglicht wird, um eine tatsächliche Arbeitslast zu treffen und eine vorhergesagte Kapazitätsanforderung der Applikation.

2. Verfahren nach Anspruch 1, umfassend:

wenn die Anfrage nach einer vorhergesagten Kapazitätsanforderung von der Vorhersageeinheit (120) empfangen wird,

- Verteilen, mittels der Vorhersageeinheit, der Anfrage an mindestens einen Kennzahlvorhersager (160),
- Berechnen einer zukünftigen Kennzahlanforderung basierend auf überwachten Kennzahldaten mittels des Kennzahlvorhersagers (160), wobei die überwachten Kennzahldaten von der Überwachungseinheit (140) abgefragt werden, was in einer Kennzahldifferenz resultiert,
- Übersetzen der Kennzahldifferenz in mindestens eine Rechnereinheitendifferenz mittels eines Kapazitätsabbilders (163),
- aggregieren der mindestens einen Rechnereinheitendifferenz mittels eines Aggregators (165), was in einer aggregierten Rechnereinheitenvorhersage resultiert, die eine Kapazitätsdifferenz definiert,
- Übermitteln der Kapazitätsdifferenz an eine Ressourcenadaptereinheit (150).

3. Verfahren nach Anspruch 1 oder 2, umfassend

- Berechnen der zukünftigen Kennzahlanforderung unter Verwendung von mindestens einem der Verfahren:
- Fuzzy-Logik-basierte Anforderungsvorhersage, und/oder
- Zeitreihenanalysis-basierte Anforderungsvorhersage, und/oder
- Mustererkennungs-basierte Anforderungsvorhersage.

4. Verfahren nach einem der Ansprüche 1 bis 3, wobei
ein Zeitraum zwischen der Adaption der Bündelgröße dynamisch mittels einer Änderungsrate der Arbeitslast bestimmt wird.

5. Verfahren nach einem der Ansprüche 1 bis 4, umfassend:

- Abfragen überwachter Kennzahldaten von der Überwachungseinheit (140), mittels der Arbeitslastcharakterisierungseinheit (130),
- in Übereinstimmung bringen der überwachten Kennzahldaten mit vorbestimmten Arbeitslastklassifikationen,
- Auswählen und Abbilden der in Übereinstimmung gebrachten Arbeitslastklassifikationen in eine geeignete Konfiguration für die Vorhersageeinheit (120), wobei
- falls die überwachten Kennzahldaten ihre Klassifikation geändert haben, wird eine auf den neuesten Stand gebrachte Konfiguration für Berechnung der vorhergesagten Kapazitätsanforderungen bereitgestellt an die Vorhersageeinheit (120).

6. Verfahren nach Anspruch 5, umfassend:

- in Übereinstimmung bringen der überwachten Kennzahlen mit vorbestimmten Kennzahlklassifikationen, wobei
- falls die überwachte Kennzahl mit einer vorbestimmten Kennzahlklassifikation übereinstimmt, wird eine existierende Konfiguration auf den neuesten Stand gebracht mit der in Übereinstimmung gebrachten Kennzahlklassifikation, was der Vorhersageeinheit (120) ermöglicht, die Kapazitätsdifferenz besser zu berechnen, oder
- falls die überwachte Kennzahl außerhalb der vorbestimmten Klassifikationen ist, wird eine neue Konfiguration erzeugt.

7. Verfahren nach Anspruch 1 bis 6, umfassend:

- Detektieren mindestens einer Leistungskennzahl mittels Bestimmen, welche Kennzahldaten den primären Einfluss auf Arbeitslastanforderung für eine vorbestimmte Applikation hat.

8. Verfahren nach Anspruch 1 bis 7, umfassend:

- Bestimmen der vorhergesagten Kapazitätsanforderungen mittels mindestens eines Kennzahlvorhersagers (160) basierend auf einer reaktiven Summe eines Reaktivreglers (161) für gegenwärtige Kapazitätsallokationsberechnungen und einer proaktiven Summe eines Proaktivreglers (162) für zukünftige vorhergesagte Kapazitätsanforderungsberechnungen, wobei
- die Kombination von reaktiver Summe und proaktiver Summe die Kapazitätsdifferenz bestimmt, was ermöglicht, dass neue Ressourceneinheiten in Betrieb sind, wenn die vorhergesagte Kapazitätsanforderung benötigt wird, falls sie unmittelbar gestartet werden.

9. Verfahren nach einem der Ansprüche 1 bis 8, wobei:

- ein vorbestimmtes Intervall eine minimal akzeptable Größe des Bündels von Ressourceneinheiten und eine maximal akzeptable Größe des Bündels von Ressourceneinheiten anzeigt, wobei
- die Intervalle entsprechend einem vorbestimmten Plan aktiviert werden, wobei
- jedem Intervall ein Rang zur Auflösung von überlappenden Intervallen zugewiesen wird.

10. Verfahren nach Anspruch 9, wobei:

- die minimal und maximal akzeptablen Größen, und deren Aktivierungspläne und Ränge dynamisch bestimmt werden mittels der historischen Arbeitslastkennzahldatenanalyse.

11. Verfahren nach einem der Ansprüche 1 bis 10, umfassend:

- Auflösen der Ressourceneinheiten mittels der Ressourcenadaptereinheit (150) zum Abbilden mit den verfügbaren Ressourceneinheiten in dem Bündel, wobei
- die Bündelgröße von Ressourceneinheiten, mit einer bestimmten Überschussgröße, mittels der Ressourcenadaptereinheit (150) reduziert wird, wenn eine vorausbezahlte Dauer abläuft.

12. Ressourcenreglernetzknoten (100) zum Ermöglichen automatischer Adaption der Größe eines Bündels von Ressourceneinheiten, wobei die Ressourceneinheiten zum Betreiben einer Applikation in einer Computerumgebung benötigt werden, wobei:

- der Knoten eingerichtet ist, eine vorhergesagte Kapazitätsanforderung anzufordern mittels einer Ressourcenreglereinheit (110) von einer Vorhersageeinheit (120),
- der Knoten eingerichtet ist, eine Konfiguration zur Berechnung der vorhergesagten Kapazitätsanforderung von einer Arbeitslastcharakterisierungseinheit (130) anzufragen mittels der Vorhersageeinheit (120) als eine Antwort auf die Anfrage,
- der Knoten eingerichtet ist, mindestens eine Leistungskennzahl anzufragen basierend auf Arbeitslastkennzahldaten von einer Überwachungseinheit (140) von der Vorhersageeinheit (120) als eine Antwort auf die Anfrage,
- der Knoten eingerichtet ist, eine Kapazitätsdifferenz von Rechnereinheiten zu berechnen basierend auf der mindestens einen Leistungskennzahl und der Konfiguration durch die Vorhersageeinheit (120), wobei die Kapazitätsdifferenz mittels einer Differenz von Rechnereinheiten definiert ist zwischen einer gegenwärtigen Kapazitätsallokation und einer vorhergesagten zukünftigen Arbeitslast,
- der Knoten eingerichtet ist, die Differenz der Rechnereinheiten in eine Differenz der Ressourceneinheiten mittels einer Ressourcenadaptereinheit (150) zu übersetzen,
- der Knoten eingerichtet ist, eine Größenadaptionsanweisung zu übermitteln, die die Differenz der Ressourceneinheiten zu dem Bündel von Ressourceneinheiten umfasst, das Bündel von Ressourceneinheiten anweist, seine Größe des Bündels der Ressourceneinheiten entsprechend der Differenz der Ressourceneinheiten zu adaptieren, wodurch automatische Adaption des Bündels von Ressourceneinheiten ermöglicht wird, um eine tatsächliche Arbeitslast und eine vorhergesagte Kapazitätsanforderung der Applikation zu treffen.

**13.** Knoten nach Anspruch 13, wobei

- der Knoten eingerichtet ist, jeden Verfahrensanspruch nach Anspruch 2 bis 11 auszuführen.

**14.** Computerprogramm, umfassend computerlesbare Kodiermittel, die in einem Ressourcenreglernetzknoten laufen zum Ermöglichen automatischer Adaption der Größe eines Bündels an Ressourceneinheiten nach den Ansprüchen 12 oder 13, das den Ressourcenreglernetzknoten veranlasst zum Ermöglichen automatischer Adaption der Größe von einem Bündel von Ressourceneinheiten, um das entsprechende Verfahren nach einem der Ansprüche 1 bis 11 auszuführen.

**15.** Computerprogrammprodukt, umfassend ein computerlesbares Medium und ein Computerprogramm nach Anspruch 14, wobei das Computerprogramm auf dem computerlesbaren Medium gespeichert ist.

**Revendications**

**1.** Procédé dans un noeud de commande de ressources (100) pour permettre une adaptation automatique de la taille d'un parc d'unités de ressources, les unités de ressources étant nécessaires au fonctionnement d'une application dans un environnement informatique, le procédé comprenant :

- la requête d'une demande de capacité prédite par une unité de commande de ressources (110) depuis une unité de prédiction (120),
- la récupération d'une configuration pour calculer la demande de capacité prédite depuis une unité de caractérisation de charge de travail (130) par l'unité de prédiction (120) en tant que réponse à la requête,
- la récupération d'au moins un indicateur de performance clé sur la base de données métriques de charge de travail depuis une unité de surveillance (140) par l'unité de prédiction (120) en tant que réponse à la requête,
- le calcul d'une différence de capacité d'unités de calcul sur la base de l'au moins un indicateur de performance clé et de la configuration par l'unité de prédiction (120), la différence de capacité étant définie par une différence d'unités de calcul entre une attribution de capacité courante et une demande de capacité prédite,
- la conversion de la différence d'unités de calcul en une différence d'unités de ressources par une unité d'adaptation de ressources (150),
- la transmission d'une instruction d'adaptation de taille comprenant la différence d'unités de ressources au parc d'unités de ressources, ordonnant au parc d'unités de ressources d'adapter sa taille de parc d'unités de ressources selon la différence d'unités de ressources, permettant ainsi une adaptation automatique du parc d'unités de ressources pour satisfaire une charge de travail réelle et une demande de capacité prédite de l'application.

**2.** Procédé selon la revendication 1, comprenant :

lorsque la requête pour une demande de capacité prédite est reçue par l'unité de prédiction (120),

- la distribution, par l'unité de prédiction, de la requête à au moins un prédicteur métrique (160),
- le calcul d'une future demande métrique sur la base de données métriques surveillées par le prédicteur métrique (160), les données métriques surveillées étant récupérées de l'unité de surveillance (140), résultant en une différence métrique,
- la conversion de la différence métrique en au moins une différence d'unités de calcul par un dispositif de mappage de capacité (163),
- l'agrégation de l'au moins une différence d'unités de calcul par un agrégateur (165), résultant en une prédiction d'unité de calcul agrégée, définissant une différence de capacité,
- la transmission de la différence de capacité à l'unité d'adaptation de ressources (150).

**3.** Procédé selon la revendication 1 ou 2, comprenant

- le calcul de la future demande métrique à l'aide d'au moins un des procédés :
- prédiction de demande sur la base d'une logique floue, et/ou
- prédiction de demande sur la base d'une analyse de séries chronologiques, et/ou
- prédiction de demande sur la base d'une reconnaissance de motif.

**4.** Procédé selon l'une quelconque des revendications 1 à 3, dans lequel :

- une période de temps entre une adaptation de la taille du parc est déterminée dynamiquement par une vitesse de changement de la charge de travail.

**5.** Procédé selon l'une quelconque des revendications 1 à 4, comprenant :

- la récupération de données métriques surveillées depuis l'unité de surveillance (140), par l'unité de caractérisation de charge de travail (130),
- la mise en correspondance des données métriques surveillées avec des classifications de charge de travail prédéterminées,
- la sélection et le mappage de la classification de charge de travail correspondante à une configuration appropriée pour l'unité de prédiction (120), dans lequel
- si les données métriques surveillées ont une classification changée, une configuration mise à jour pour calculer la demande de capacité prédite est fournie à l'unité de prédiction (120).

**6.** Procédé selon la revendication 5, comprenant :

- la mise en correspondance de la métrique surveillée avec des classifications métriques prédéterminées, dans lequel
- si la métrique surveillée correspond à une classification métrique prédéterminée, une configuration existante est mise à jour avec la classification métrique correspondante, permettant à l'unité de prédiction (120) de mieux calculer la différence de capacité, ou
- si la métrique surveillée est en dehors des classifications prédéterminées, une nouvelle configuration est créée.

**7.** Procédé selon l'une quelconque des revendications 1 à 6, comprenant :

- la détection d'au moins un indicateur de performance clé par détermination des données métriques qui ont l'influence primaire sur une demande de charge de travail pour une application prédéterminée.

**8.** Procédé selon l'une quelconque des revendications 1 à 7, comprenant :

- la détermination de la demande de capacité prédite par l'au moins un prédicteur métrique (160) sur la base d'une somme réactive d'un dispositif de commande réactif (161) pour un calcul d'attribution de capacité courante et d'une somme proactive d'un dispositif de commande proactif (162) pour un calcul d'une demande de capacité prédite future, dans lequel
- la combinaison de la somme réactive et de la somme proactive détermine la différence de capacité, permettant que de nouvelles unités de ressources soient fonctionnelles lorsque la demande de capacité prédite est nécessaire, si elles sont démarrées immédiatement.

**9.** Procédé selon l'une quelconque des revendications 1 à 8, dans lequel :

- un intervalle prédéterminé indique une taille acceptable minimale du parc d'unités de ressources et une taille acceptable maximale du parc d'unités de ressources, dans lequel
- les intervalles sont activés selon une planification déterminée, dans lequel
- chaque intervalle est assigné à un rang pour une résolution d'intervalles se chevauchant.

**10.** Procédé selon la revendication 9, dans lequel :

- les tailles acceptables minimale et maximale, et leurs planifications d'activation et leurs rangs sont déterminés dynamiquement par une analyse de données métriques de charge de travail historique.

**11.** Procédé selon l'une quelconque des revendications 1 à 10, comprenant :

- la résolution d'unités de ressources par l'unité d'adaptation de ressources (150) pour le mappage avec des unités de ressources disponibles dans le parc, dans lequel
- la taille du parc des unités de ressources, avec une taille excédentaire déterminée, est réduite par l'unité d'adaptation de ressources (150) lorsqu'une période prépayée expire.

12. Noeud de commande de ressources (100) pour permettre une adaptation automatique de la taille d'un parc d'unités de ressources, les unités de ressources étant nécessaires au fonctionnement d'une application dans un environnement informatique, dans lequel :

- le noeud est agencé pour faire une requête pour une demande de capacité prédite par une unité de commande de ressources (110) depuis une unité de prédiction (120),
- le noeud est agencé pour récupérer une configuration pour calculer la demande de capacité prédite depuis une unité de caractérisation de charge de travail (130) par l'unité de prédiction (120) en tant que réponse à la requête,
- le noeud est agencé pour récupérer au moins un indicateur de performance clé sur la base de données métriques de charge de travail depuis une unité de surveillance (140) par l'unité de prédiction (120) en tant que réponse à la requête,
- le noeud est agencé pour calculer une différence de capacité d'unités de calcul sur la base de l'au moins un indicateur de performance clé et de la configuration par l'unité de prédiction (120), la différence de capacité définie par une différence d'unités de calcul entre une attribution de capacité courante et une future charge de travail prédite,
- le noeud est agencé pour convertir la différence d'unités de calcul en une différence d'unités de ressources par une unité d'adaptation de ressources (150),
- le noeud est agencé pour transmettre une instruction d'adaptation de taille comprenant la différence d'unités de ressources au parc d'unités de ressources, ordonnant au parc d'unités de ressources d'adapter sa taille de parc d'unités de ressources selon la différence d'unités de ressources, permettant ainsi une adaptation automatique du parc d'unités de ressources pour satisfaire une charge de travail réelle et une demande de capacité prédite de l'application.

13. Noeud selon la revendication 13, dans lequel :

- le noeud est agencé pour réaliser le procédé selon l'une quelconque des revendications 2 à 11.

14. Programme informatique, comprenant un moyen de code lisible par ordinateur qui, lorsqu'il est exécuté dans un noeud de commande de ressources pour permettre une adaptation automatique de la taille d'un parc d'unités de ressources selon les revendications 12 ou 13, amène le noeud de commande de ressources à permettre une adaptation automatique de la taille d'un parc d'unités de ressources pour réaliser le procédé correspondant selon l'une quelconque des revendications 1 à 11.

15. Produit-programme d'ordinateur, comprenant un support lisible par ordinateur et un programme informatique selon la revendication 14, dans lequel le programme informatique est stocké sur le support lisible par ordinateur.

## Fig. 1

100

**Resource controller node**

110

Resource
controller
unit

130

Workload
characterization
unit

140

Monitor
unit

120

Prediction
unit

150

Resource
adapter
unit

Resource units

Fig. 2

Fig. 3

Fig. 4

150

Resource adapter unit

200

Capacity limit auto adjuster

209

Environment metric collector

203

Capacity limit scheduler

205

Resize planner

207

Infrastructure manager

Fig. 5

S100

Request
predicted
workload

S110

Retrieve
configuration

S120

Retrieve KPI

S130

Calculate
capacity
difference

S140

Translate
difference to
resource units

S150

Transmit size
adaptation
instruction

Fig. 6

S200 Distribute workload request

S210 Calculate future metric demand

S220 Translate metric difference to compute unit difference

S230 Aggregate compute unit(s)

S240 Transmit capacity difference

Fig. 7

Retrieve metric data ⟶ S260

Match metric data with workload class ⟶ S265

Map workload class with configuration ⟶ S270

S275

NO ⟵ Changed class

YES

S280

S285
Update existing class ⟵ Determination: Changed class/ Update of existing class/create new class ⟶ Create new class S290

Fig. 8

Provide updated configuration ⟶ S295

100

## Resource controller node

130

Workload
characterization
unit

110

Resource
controller
unit

201 — P

140

Monitor
unit

120

Prediction
unit

150

Resource
adapter
unit

M

202

Fig. 9

100

Resource
controller
node

100

Resource
controller
node

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040181794 A
- US 20030149685 A
- US 20090183168 A
- US 6516350 B1